# EUROPEAN PATENT APPLICATION

(11) **EP 2 805 987 A1**
(43) Date of publication of application: **26.11.2014**
(21) Application number: 12866176.6
(22) Date of filing: 18.01.2012
(51) Int. Cl.: C08J 3/16, C08K 3/10

(54) **METHOD FOR MANUFACTURING MAGNETIC PARTICLE COMPOSITE**

(71) Applicant: RBC Bioscience Corp., Taiwan 235 (TW)
(72) Inventor: YOUNG, Tai-Horng, Taipei City 100 Taiwan (TW); CHANG, Hsu-Hsien, Taipei City 100 Taiwan (TW); KUAN, Cheng-Chun, New Taipei City 231 Taiwan (TW); CHUNG, Ting-Hao, New Taipei City 231 Taiwan (TW)
(74) Representative: Lang, Christian
(86) International application number: PCT/CN2012/000087
(87) International publication number: WO 2013/106948

(57) **Abstract**

Disclosed is a method for manufacturing a magnetic particle composite, which comprises the following steps: providing magnetic nanoparticles; providing water-soluble macromolecules, and dissolving the water-soluble macromolecules to form a water-soluble macromolecular solution; uniformly mixing the magnetic nanoparticles with the water-soluble macromolecular solution to form a first mixed solution; providing a dispersed solution, and uniformly mixing the dispersed solution with the frrst mixed solution to form a second mixed solution; and finally adding a hardener into the second mixed solution to form a magnetic particle composite. This manufacturing method is used to form a magnetic particle composite through control of boundary tension between immiscible liquid phases and to control the particle size of a finished product. Therefore, magnetic particle composites of different particle sizes and different saturation magnetization values can be manufactured by using a simple process at a low cost.

## Description

### BACKGROUND OF THE INVENTION

### 1. Technical Field

The present invention relates to a manufacturing method of magnetic composite particles and, more particularly, to a method of manufacturing the magnetic composite particles with steps of controlling the solution mixing.

### 2. Description of the Related Art

The application of magnetic particles in biomedical is quite extensive. These magnetic particles are often used in separation or screening of biological molecules, especially the more popular magnetic particles composite. The structure of magnetic composite particle comprises a magnetic particle, which is modified by natural or synthetic polymer, and normally contributes to the advantages including maintaining the stability and dispersibility, enhancing the binding ability and specificity for the biological molecules, such as nucleic acids or proteins, reducing the toxicity, improving the biocompatibility, and increasing the water solubility.

Regarding the application of magnetic composite particles in separation of biomolecules, the particle size of the magnetic composite particle often ranges from nanometer to micron and each has its applicability when it is commonly used in proteins or antibodies coupled to the magnetic composite particles. For example, the immune magnetic composite particles are utilized for separating the specific cells based on the usage of antibodies coupled to the magnetic composite particles binding to the surface antigens of the target cells, and then the magnetic composite particles bound cells are absorbed and retained in the external magnetic field, thereby achieving the effect of separating the target cell. Herein, concerning the amount of the magnetic composite particles being combined with the cells per unit, the quantity of magnetic composite particles in micron level is far less than the magnetic composite particles in nano level, but the magnetic composite particles in micron level display higher magnetic force in view of the overall magnetic force per unit of the cell, thus resulting in better separation.

For example, the products and their functional features of the currently commercial micron-sized magnetic composite particles are listed as follows: American BD Bioscience products: BD IMagnet™ magnetic particles have a particle size of about 0.1 to 0.45 microns, ranging between nano-level and micron-level, and the surface of this magnetic particle exhibits monoclonal antibodies, which can adsorb specific cells via magnetic separator tube, then separation is performed. Norway Dynal products: Dynabeads® magnetic beads, whose material is polystyrene (Polystyrene, PS) and particle size is about 2.8 microns. Besides, this magnetic bead is used to bind to specific antibodies for selectively adsorbing specific cells, followed by providing magnetic field for separating cells, and truncating by specific enzyme on the binding site between the antibody on the surface of magnetic bead and the antigen of the cell surface for obtaining the target cells. American Seradyn Products: Sera-Mag® magnetic particle, whose particle size is about 1 micron. American Polysciences, Inc products: BioMag® beads, whose particle size is about 1 micron, core is consisting of iron oxide, and outer layer is coated with a layer of silane compound (silane). And the same is Polysciences, Inc products Estapor® Ultra. paramagnetic particles (superparamagnetic microspheres), whose particle size is ranging from sub-micron to micron.

In addition to conventional magnetic particles, super-paramagnetic particulate material is quite remarkable by its characteristic only displaying the magnetism in the case of applied external magnetic field, and there's no magnetic in the opposite condition. Hence, the magnetism displayed on Super-paramagnetic particulate can be controlled by adjusting the external magnetic field, and this technology can be applied in respect of the magnetic field.

Generally, the aforementioned conventional manufacturing method of the magnetic composite particles can be divided into two categories: one is a method of coating, in which the magnetic metal material is served as the nuclear, and then coated with a polymer to form the outer shell, the other is a method of spreading, in which the magnetic metal material uniformly disperse in the polymer material, or fill the holes of the polymer.

Regarding the above-mentioned coating method, the silane compound is usually used to coat the magnetic metal particles to form the magnetic composite particles with particle size of about 0.1 to 10 microns, mainly applied in immunosorbent assay. Rather than magnetic metal particles, polymer materials formed with non-silane compounds can also be applied to coat the magnetic metal particles to form the magnetic composite particles.

In addition, referring to the current coating method, U.S. Patent No. 4,267,234 discloses the usage of poly-glutaraldehyde polymer coated magnetic metal particles and a polymer having an aldehyde group can be coupled to the antibody or antigen. This patent also discloses that this polymer can also be mixed with polyvinylpyrrolidone (PVP) or methacrylate in polymer or monomer to increase its applicability. U.S. Patent No. 4,554,088 discloses the usage of silane-based polymer-coated iron oxide ((Fe₃O₄) particle, which is modified via diazotization, or by carbodiimide or glutaraldehyde, etc., for preparation of magnetic polymer particles, which can be coupled antibodies and applied to biochemical separation techniques. U.S. Patent No. 4,783,336 discloses a method to coat the iron oxide particles by polyacrolein polymer. U.S. Patent No. 6,204,033 discloses an approach of coating ferromagnetic or superparamagnetic substance via the pure polyethylene polymer. U.S. Patent No. 4,452,773 and U.S. Patent No. 4,795,698 disclose a method of coating the iron oxide particles by natural polymers (such as dextran) and bovine serum albumin (BSA), respectively. ROC Patent No. 169,427 also discloses a method of using organic polymer polystyrene or methacrylate as the shell to coat the magnetic iron oxide ferrite. Thus, the above-mentioned patents are based on using the polymer to coat the magnetic particles, thus the magnetic composite particles form the central core with the magnetic particles and form the surface with the functional groups of the polymer.

Though the above-mentioned manufacturing methods are available to prepare the magnetic composite particles, it's difficult to control the shape and size of the obtained magnetic composite particles, resulting in a wide distribution of particle size, irregular shape and appearance, even with particles condensation phenomena, which may affect the magnetic response capability and magnetic capacity of the finished magnetic composite products and limit their applicability.

In order to solve the aforesaid problems, U.S. Patent No. 5,320,944 discloses a magnetic polymer particle formed by coat the polystyrene polymer particles with a layer of magnetic substance composed of oxidized iron, cobalt and nickel, which is applied in immunoassay. For similar purpose, an alternative method of spreading is often utilized to making the magnetic composite particles. Such method is usually to perform the magnetic metal substance dispersed uniformly in the polymer material by using the polymer-based polymerization monomer to uniformly mix with the magnetic material or to fill the holes in the polymer material. Thus, after the polymerization reaction, the magnetic polymer particle is obtained.

For example, U.S. Patent No. 4,454,234 discloses a submicron magnetic composite particles which is formed by mixing acrylamide with N'N'-methylenebisacryl-amide and magnetic particles (LaMn₂Ge₂) and performing the polymerization reaction under a temperature of 37 °C, followed by modifying the original ester group to carboxyl group or acid amide group and catalytic reaction, and then to be applied in binding protein. U.S. Patent No. 4,358,388 discloses a suspension polymerization process of oil-in-water, in which the monomer uniformly mix with the magnetic metal particles (ferroferric oxide), initiator and solvent, etc., and further emulsifies the suspension in the organic phase and be added into the aqueous phase to perform polymerization to form the magnetic polymer particles with uniform distribution of magnetic particles inside thereof.

Further, the manufacturing method of the aforementioned U.S. Seradyn's product, Sera-Mag® magnetic particles, is an alternative typical manufacturing method of the magnetic composite particles, in which the polystyrene particles are prepared, then processed by modification of introducing the carboxyl group to the surface, embedding the surface of the particle with a layer of magnetic materials thereto, and coating the particles with non-styrenic polymer (encapsulation), and finally obtaining the particles via this method will be referred to the magnetic core-shell particles.

Another similar approach of spreading is as follows: First, spherical polymer particles of uniform size are prepared and uniformly dispersed in the polymer or filled the holes of the polymer, or even coated on the surface of the polymer to form a layer of magnetic materials. For example, U.S. Patent No. 4,654,276 discloses a porous micron polymer particle synthesized by mixing methyl methacrylate (MMA) with glyceryl methacrylate (GMA) and other kinds of monomers, then uniformly mixing the synthetic porous micron polymer particle with salts, which are used to form iron oxide divalent iron (Fe (II)) and ferric iron (Fe (III)), or materials required for preparation of other types of magnetic particles, followed by adding ammonium hydroxide (NH₄OH) and heating, so that the magnetic particles are generated in the pores of the polymer and engaged into the pores thereto. However, due to the porous micron polymer particles are synthesized with different monomers, the content of formed magnetic nano-particles is different, generally ranging between 5% and 20%.

According to aforementioned manufacturing method as disclosed in U.S. Patent No. 4,654,276, a magnetic composite particle which has uniform shape, narrow distribution size and good quality can be obtained, but the magnetic particles are generated within the pores of the polymer, resulting in limitations of its manufacturing and application level. For example, the precursors of the magnetic substance and the related reagents must be diffused into the fine particles of the polymer and contact and react with each other, and then a magnetic substance is thus produced. Moreover, this method has its limitations in the kind of available magnetic materials and the magnetic material amount of the magnetic composite particles (the magnetic material amount per unit of volume), so that the magnetization of the magnetic composite particles also reaches its cap.

In summary, the manufacturing process of the magnetic composite particles usually comprises the steps of performing complicated chemical polymerization or adding various surfactants, thus limits the available types of polymer and the magnetic metal species and limiting the application of the finished products. Furthermore, due to the complicated chemical polymerization must be performed during the manufacturing process of the magnetic composite particles, there exists considerable technical problems and cost burden in both materials modification and mass production, and those become the issues needed to overcome in the technical field.

### SUMMARY OF THE INVENTION

In an attempt to overcome the recited defects of the existing technology, a primary objective of this invention is to provide a manufacturing method of magnetic composite particles including the step of controlling the interface tension between oil and water. The manufacturing method of magnetic composite particles includes the following steps:
(1) Providing magnetic nano-particles;
(2) Providing water-soluble macromolecules, and dissolving the water-soluble macromolecule into an aqueous macromolecule solution;
(3) Mixing the magnetic nano-particles with the aqueous macromolecule solution in a particular ratio of weight into a first mixture solution;
(4) Providing a disperse phase solution, and mixing the disperse phase with the first mixture solution into a second mixture solution in a particular ratio of volume at a speed of rotation by a rotational stir, wherein the particular ratio of volume ranges between 1 and 40, the speed of rotation ranges between 200 rpm and 14000 rpm, and an interface with an interface tension ranging between 0.1 mN/m and 50 mN/m is formed between the disperse phase solution and the first mixture solution due to the disperse phase and the first mixture are mutually immiscible; and
(5) Adding a hardener to the second mixture solution to produce the magnetic composite particles with a particle size ranging between 10 µm and 70 µm and a magnetization ranging between 14 emu/g and 42 emu/g.

Another objective of this invention is to provide a manufacturing method of magnetic composite particles including the step of controlling the interface tension between oil and water, thereby controlling the particle size of the magnetic composite particles and adjusting the magnetization to meet the demands for producing diverse magnetization of magnetic composite particles.

A further objective of this invention is to provide a manufacturing method of magnetic composite particles including the step of mixing the magnetic nano-particles with the water-soluble macromolecules in a particular ratio of weight into a first mixture solution. Due to the magnetization of the magnetic composite particles depends on the content of magnetic nano-particles, this method controls the magnetization of the magnetic composite particles by controlling the ratio of weight of the aforementioned magnetic nano-particles to weight of the aqueous macromolecule solution.

Yet another objective of this invention is to provide a manufacturing method of magnetic composite particles including the step of mixing the disperse phase solution with the first mixture solution not only in a particular ratio of volume but also at a particular speed of rotation by a rotational stir into a second mixture solution. As a result, the purpose of controlling the particle size of the magnetic composite particles is achieved because of controlling the ratio of volume and the speed of rotation.

Still another objective of this invention is to provide a manufacturing method of magnetic composite particles, in which the manufacturing process is simple, the cost is lower than the conventional technology, and the magnetic composite particles can be made to a variety of products.

In order to achieve the above objects, this present invention mainly controls the magnetization of the products by controlling the content of the magnetic nano-particles in the magnetic composite particles. At the same time, this invention further controls the interface tension existed between two mutually immiscible liquid phases to produce the magnetic composite particles with specific particle size, narrow and uniform distribution of particle size, and diverse magnetization by utilizing the principle of "two-phase immiscible" in colloidal solution.

The above-mentioned description of the present invention can be best understood by referring to the following detailed description of the preferred embodiments and the accompanying drawings.

### BRIEF DESCRIPTION OF THE DRAWINGS

The invention as well as preferred modes of use and advantages thereof will be best understood by referring to the following detailed description of illustrative embodiments in conjunction with the accompanying drawings, wherein:

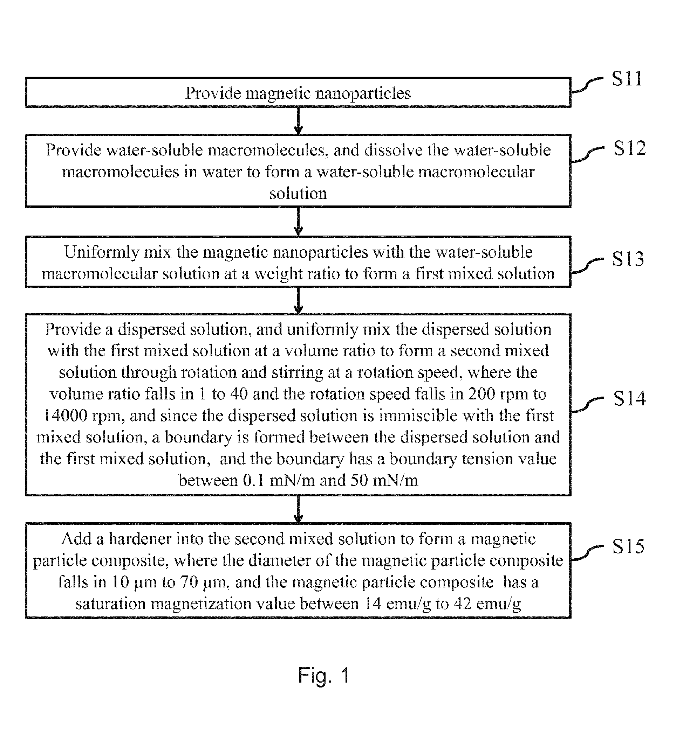

Fig. 1 is a flow chart illustrating the manufacturing method of magnetic composite particles according to the first preferred embodiment of the present invention;

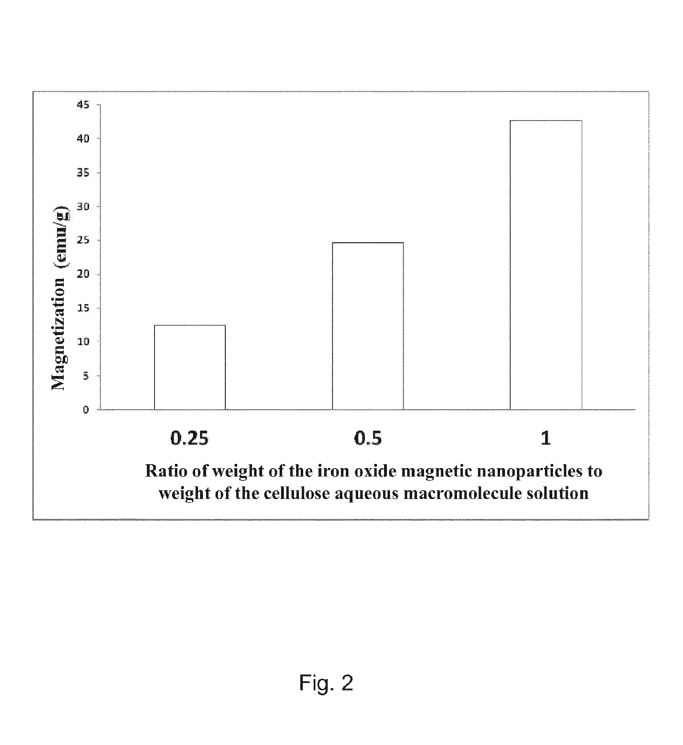

Fig. 2 is an analytic result of the magnetization indicated by histogram according to the first experiment of the present invention, in which the cellulose magnetic particulate composites A, B, and C are respectively prepared by iron oxide magnetic nano-particles and cellulose aqueous macromolecule solution in different ratio of weight (W iron oxide magnetic nanoparticles / W cellulose), and the preparation ratio value of the cellulose magnetic particulate composites A, B, and C are respectively 0.25, 0.5, and 1;

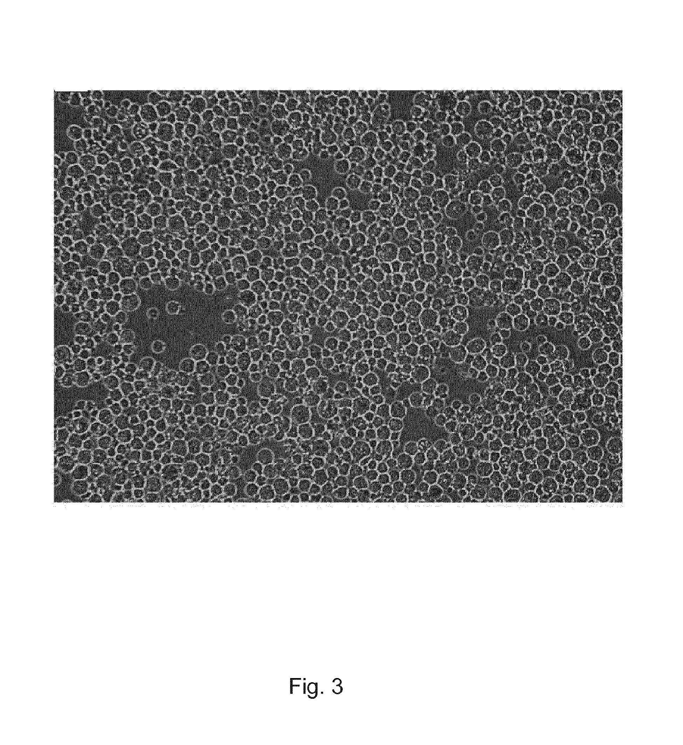

Fig. 3 is an electron microscopic photograph of the cellulose magnetic particulate composite D according to the first experiment of the present invention, in which the ratio of volume of the disperse phase to volume of the first mixture solution is 2, the magnification is 400, and the particle size ranges between 10 µm and 20 µm;

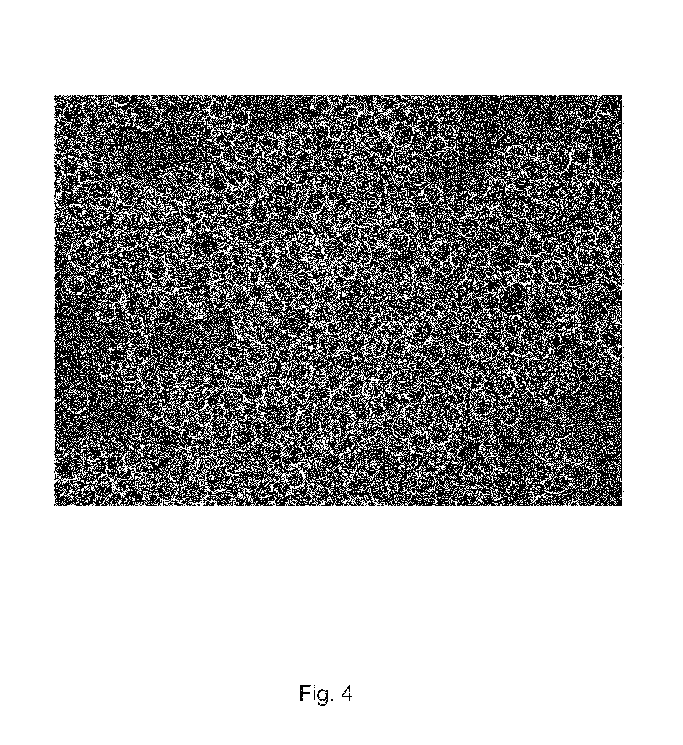

Fig. 4 is an electron microscopic photograph of the cellulose magnetic particulate composite E according to the first experiment of the present invention, in which the ratio of volume of the disperse phase to volume of the first mixture solution is 5, the magnification is 400, and the particle size ranges between 20 µm and 40 µm;

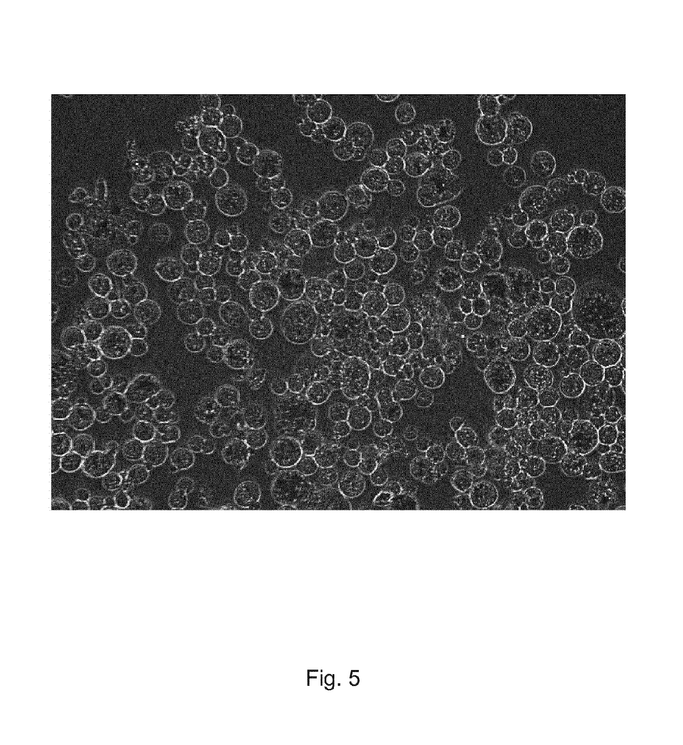

Fig. 5 is an electron microscopic photograph of the cellulose magnetic particulate composite F according to the first experiment of the present invention, in which the ratio of volume of the disperse phase solution to volume of the first mixture solution is 10, the magnification is 400, and the particle size ranges between 30 µm and 50 µm;

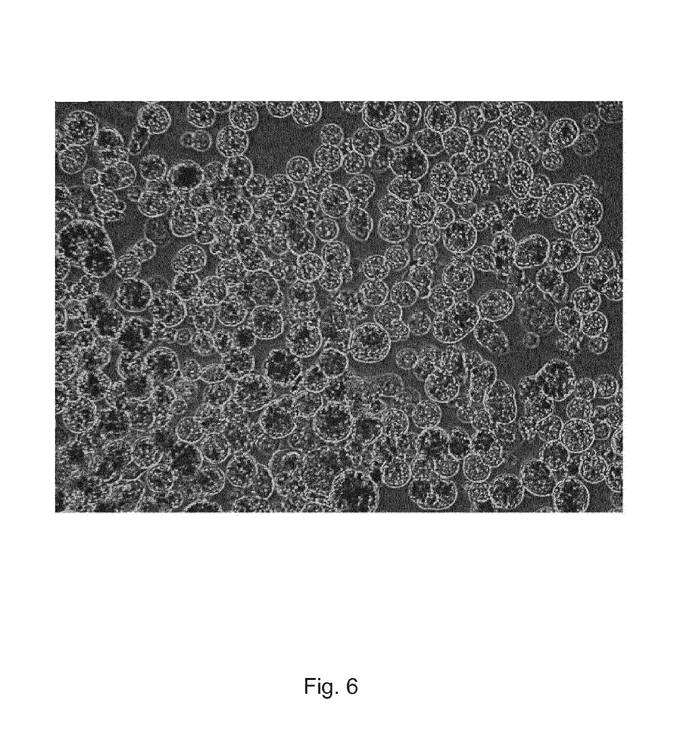

Fig. 6 is an electron microscopic photograph of the cellulose magnetic particulate composite G according to the first experiment of the present invention, in which the ratio of volume of the disperse phase solution to volume of the first mixture solution is 20, the magnification is 400, and the particle size ranges between 50 µm and 70 µm;

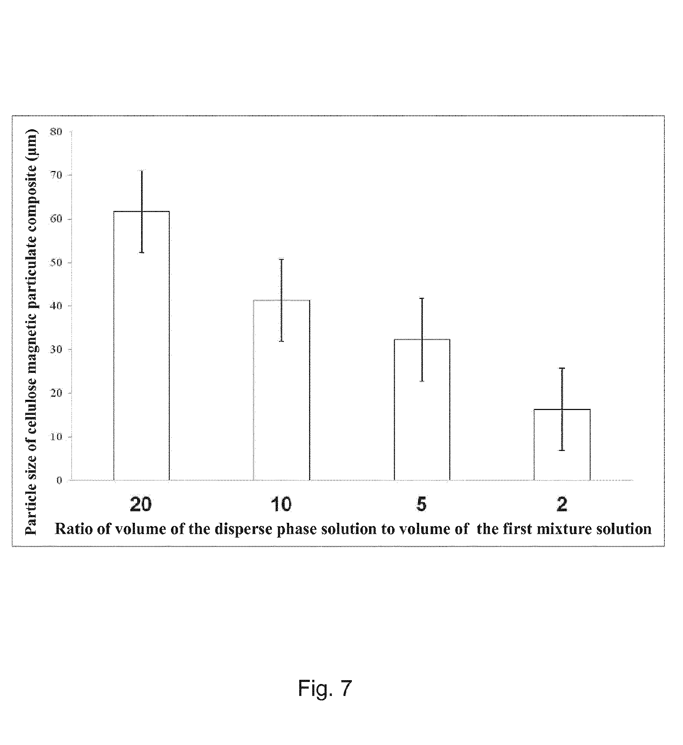

Fig. 7 is an analytic result of the magnetization indicated by histogram according to the first experiment of the present invention, in which the cellulose magnetic particulate composites D, E, F, and G are prepared by disperse phase solution and the first mixture solution in different ratio of volume (V oil / V water) of 2, 5, 10, and 20, respectively;

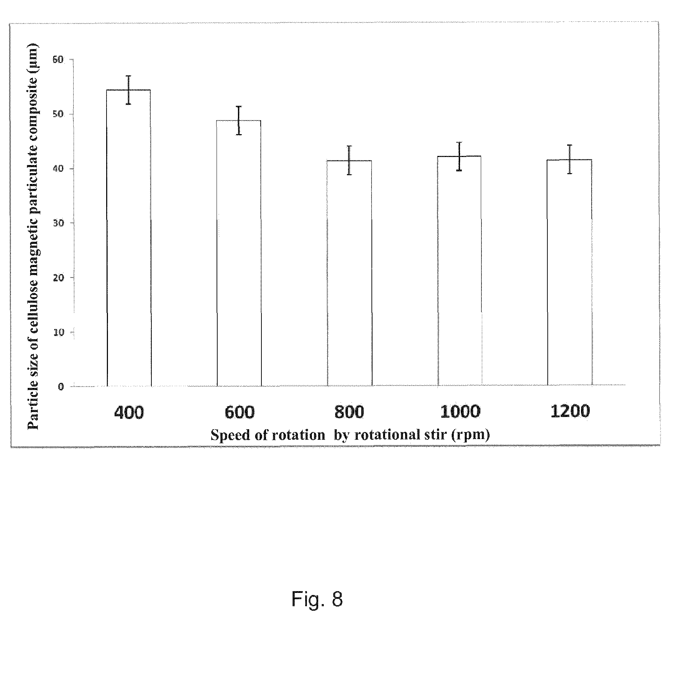

Fig. 8 is an analytic result of the diameter distribution indicated by histogram according to the first experiment of the present invention, in which the cellulose magnetic particulate composite H400, H600, H800, H1000, and H1200 are prepared by different speed of rotation of 400 rpm, 600 rpm, 800 rpm, 1000 rpm, and 1200 rpm, respectively;

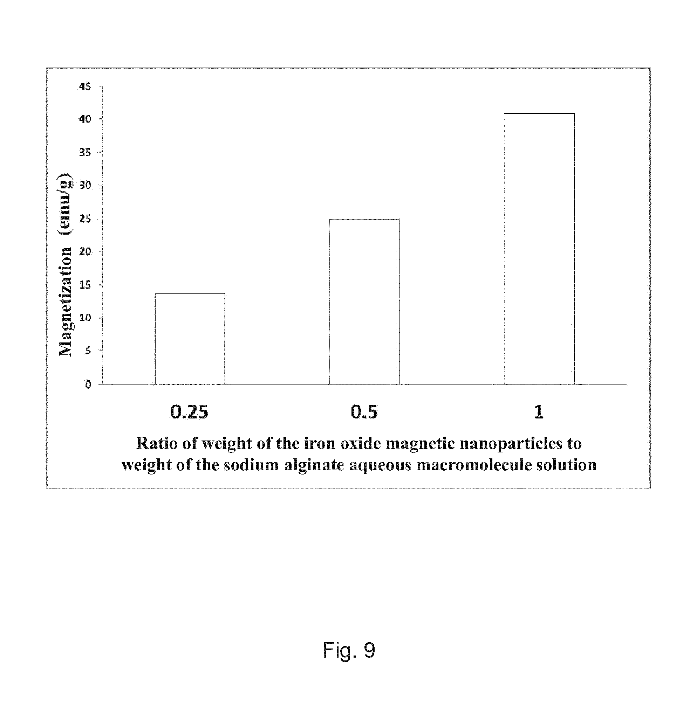

Fig. 9 is an analytic result of the magnetization indicated by histogram according to the second experiment of the present invention, in which the sodium alginate magnetic composite particles A', B', and C' are prepared by iron oxide magnetic nanoparticles and sodium alginate aqueous macromolecule solution in different ratio of weight (W iron oxide magnetic nanoparticles / W sodium alginate) of 0.25, 0.5, and 1, respectively;

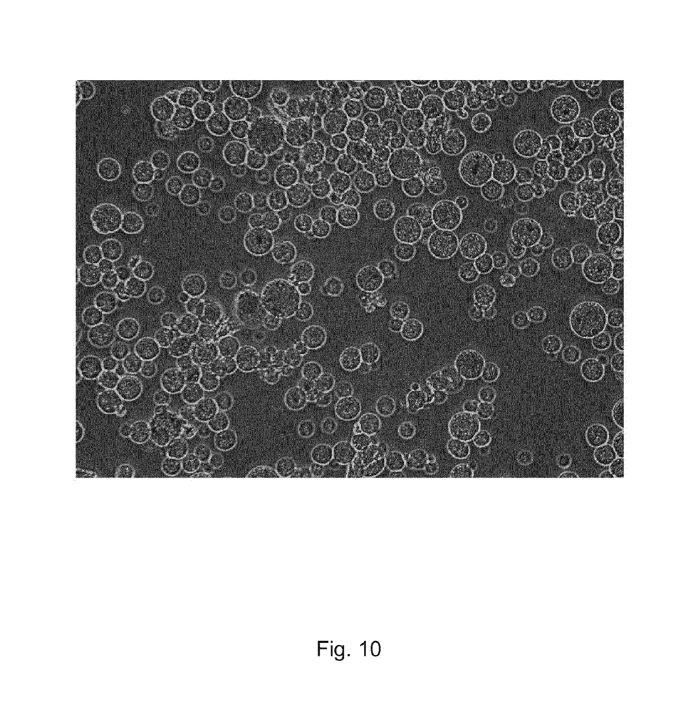

Fig. 10 is an electron microscopic photograph of the sodium alginate magnetic composite particles E' according to the second experiment of the present invention, in which the ratio of volume of the disperse phase solution to volume of the first mixture solution is 5, the magnification is 400, and the particle size ranges between 15 µm and 38 µm.

### DESCRIPTION OF THE PREFERRED EMBODIMENT

Hereinafter, a detailed description of this invention will be provided below with reference to embodiments thereof. Other advantages and features of this invention will be readily appreciated by those skilled in the art upon reviewing this disclosure. However, this invention may also be implemented or applied as other embodiments, and various details in this specification may be modified and altered from different viewpoints and based on different applications without departing from the spirit of this invention.

Fig. 1 is a flow chart of illustrating the manufacturing method of the magnetic composite particles according to a first preferred embodiment of the present invention. The manufacturing method of the magnetic composite particles includes the following steps.

Step S11: Providing magnetic nano-particles. The provided magnetic nano-particles can be magnetic or superparamagnetic. The type and method of preparing the magnetic nano-particles are not limited in this invention. Besides, the commercially finished or semi-finished or self-made magnetic nano-particles can also be used.

Particularly, the magnetic nano-particles exhibits the magnetic characteristic due to the unpaired electrons contributed to the composition of magnetic nano-particles. For example, the magnetic nano-particles generally exhibit magnetic properties when the composition in compound elements of the magnetic nano-particles contains iron, cobalt, nickel, etc. Also, when these elements are combined with other elements, magnetic materials with different characteristics can be produced, thereby exerting different derivative application. In addition, the magnetic nano-particles are compounds with chemical formula of FexMy(VIA)z, in which M is an inner transition metal element, VIA is a Group VIA element, x is not less than zero, and y and z are non-zero positive numbers.

Taking the magnetic composite particles made of ferroferric oxide (Fe₃O₄)-containing magnetic nano-particles for example, this kind of magnetic composite particles is manufactured by conventional chemical co-precipitation method. In the beginning, the iron-containing reactants are mixed well in a specific molar ratio as well as stirred at a particular speed of rotation by a rotational stir. At the same time, a catalyst is added timely to promote the reaction. Subsequently, the reaction environment of the reactant is adjusted to a suitable pH value (e.g., pH = 12) by adding sodium hydroxide (NaOH), ammonium hydroxide (NH₄OH), or other alkaline substances. Thereafter, the reaction environment is provided with a particular temperature to perform a sufficient reaction and form a precipitate at this temperature. Finally, the precipitate and therefore the ferroferric oxide (Fe₃O₄)-containing magnetic nano-particles with magnetization and particular size (diameter ranges from 10 nanometers to 100 nanometers) is obtained by the way of centrifugation.

Step S12: Providing water-soluble macromolecules, and dissolving the water-soluble macromolecules into an aqueous macromolecule solution. There is no particular limitation in species of the water-soluble macromolecules. Namely, these various water-soluble macromolecules derived from different sources and completely dissolved in water or an aqueous solution can be used to prepare the aqueous macromolecule solution. For example, the aqueous macromolecule solution can be made by dissolving the water-soluble macromolecules selected from the group consisting of cellulose, sodium alginate, chitosan, and polyvinyl alcohol, etc.

Step S13: Well mixing the magnetic nano-particles with the aqueous macromolecule solution in a particular ratio of weight into a first mixture solution. During this step, users can well mix the aqueous macromolecules solution, prepared according to the needs by choosing a specific water-soluble macromolecule following the step S12, with the magnetic nano-particles, provided following the step S 11, in a particular ratio of weight to prepare the first mixture solution.

The aforementioned particular ratio of weight refers to the ratio of weight of the magnetic nano-particles to weight of the aqueous macromolecules solution. Besides, the particular ratio of weight should be more than zero and less than or equal to one, and the preferable ratio ranges between 0.1 and 1. Namely, during the step S13 for preparation of the first mixture solution, the ratio of weight of the magnetic nano-particles to weight of the aqueous macromolecules solution (w/w) ranges between 1:1 and 1:10. In other words, the weight of the magnetic nano-particles must be less than or equal to the weight of the aqueous macromolecules solution.

Regarding the aforementioned step S 13, the key points of determining the final magnetization of the magnetic composite particles include the magnetization of the magnetic nano-particle itself, and the ratio of weight of the magnetic nano-particles to weight of the aqueous macromolecules solution. Further, the value of the ratio can be adjusted by demands to a default value within the aforementioned range, such that the magnetization of the magnetic composite particles changes with this default value. Hence, users can adjust the magnetization of the magnetic composite particles according to the different demands or in response to the purposes of the subsequent products magnetic composite particles. Accordingly, the magnetic composite particles provided can be used in a more effective and extensive manner, which thereby further reduces the cost of producing or purchasing the magnetic nano-particles, and improves the productivity and application benefits of the magnetic composite particles.

Moreover, there is no particular limitation in utilizing the adoptable mixing method during the step S13. Users can choose any suitable mixing method such as rotary stirring, vibrational mixing or other mixing mode, as long as the uniform mixing can be achieved to prepare the first mixture solution.

Step S14: Providing a disperse phase solution and well mixing it with the first mixture solution into a second mixture solution in a particular ratio of volume at a speed of rotation by a rotational stir. During this step, the principle of "two-phase immiscible" for oil and water is applied and described in the following.

Generally, two different phases existing in the colloidal solution are referred to dispersed phase and the continuous phase, in which the dispersed phase is composed of fine particles or droplets throughout the entire continuous phase. In detail, the conventional "two-phase immiscible" generally refers to that an organic phase and an aqueous phase are immiscible. Specifically, different forms of dispersion are produced by mixing two different phases according to different mixing conditions such as mixing temperature, mixing rate, and different methods. For example, in the case of rotational mixing, one of the two phases is dispersed in the other phase in the form of droplets, in which the phase in form of droplets is called as a dispersed phase system and the other is the continuous phase. Instead, the term "two-phase immiscible" as described in this present invention refers to the phenomenon that one liquid is immiscible with the other liquid.

The aforementioned form of dispersion for the organic phase and the aqueous phase can be divided into two categories: (1) an aqueous phase dispersed in the organic phase is called as "water in oil" W/O (water in oil) type; and (2) the organic phase dispersed in the aqueous phase is called as "oil in water" O/W (oil in water) type. The "two-phase immiscible" term in this present invention specifically refers to a water-oil hybrid system consisting of oil phase and water phase, in which the two phases are immiscible. Besides, the characteristic or principle of water-oil immiscible is already known for those skilled in the art, and would be briefly described in the following to facilitate illustration of the features in this present invention.

In view of thermodynamic theories, whether a system can be in a thermodynamically stable state depends on the free energy of the system (ΔG) is at its minimum value. The free energy (ΔG) can be expressed as: ΔG = ΔU - T ΔS, in which T refers to the absolute temperature, ΔS refers to the entropy and ΔU refers to the internal energy of the system. Hence, the aforementioned entropy (ΔS) and internal energy (ΔU) are also to be the indirect indicators for determination of stability of the system.

As the liquid phase is concerned, different types of liquids exhibit different surface tension. The surface tension is the force occurred to contract the surface to have a minimum surface area when the surface molecules of the liquid suffer uneven force in each direction, such as force of adhesion is greater than the force of cohesion to air. Otherwise, when different kinds of liquid A and liquid B were mixed or contacted with each other, an "interface tension" (γ) is formed between the liquid phases due to the different surface tensions of the liquids. Herein, the strength of the interface tension is dependent on the size of the contact area (ΔA) of the interface between different liquids. Hence, the aforementioned internal energy (ΔU) of the oil-water hybrid system in this present invention can be calculated and which is approaching the value of γΔA. Thus, the relationship can be redefined the following formula G = γΔA-TΔS.

It could be seen that though the immiscible characteristic existing in oil-water mixture can increase the entropy of the oil-water hybrid system, the interface tension between the oil phase and the aqueous phase is much larger than TΔS. Therefore, the free energy is almost dependent on γΔA, thus resulting in that the excess energy often exists in unstable state in the oil-water hybrid system. That is the reason why separation usually occurs in general coexistence of oil and water to cause the two immiscible phases. For solving the problem, the way of adding the surfactant was often utilized in the past to form the two-phase micelle for sufficiently and stably hybridization.

Instead, based on the aforementioned feature describing that water and oil are immiscible in water-oil hybrid system, the present invention provides a manufacturing method of magnetic composite particles without the step of adding surfactant, comprising the steps of:
(1) Providing magnetic nano-particles;
(2) Providing water-soluble macromolecules, and dissolving the water-soluble macromolecule into an aqueous macromolecule solution;
(3) Mixing the magnetic nano-particles with the aqueous macromolecule solution in a particular ratio of weight into a first mixture solution;
(4) Providing a disperse phase solution, and mixing the disperse phase with the first mixture solution into a second mixture solution in a particular ratio of volume at a speed of rotation by a rotational stir; and
(5) Adding a hardener to the second mixture solution to produce the magnetic composite particles.

Regarding the step S14, the aforementioned feature "two-phase immiscible" is applied, and means that an interface tension is formed during hybridization of water and oil. Besides, the oil-water interface tension is operated and controlled by adjusting the ratio of volume of the dispersed phase solution to volume of the first mixture solution.

After the initial quantification of the dispersed phase solution and the first mixture solution, rotating and stirring are executed to mix the dispersed phase solution with the first mixture solution to form the second mixture solution. Also, the second mixture solution provides an oil-water hybrid system for implementing the manufacturing of the magnetic composite particles in this present invention, thereby achieving the purpose of controlling the particle size of the magnetic composite particles.

Next, the scope and relationship of "the ratio of volume of the dispersed phase solution to volume of the first mixture solution", "the speed of rotation" and "the particle size of the magnetic composite particles" in step S14 are further explained as following description.

In addition, the said particular ratio of volume of the dispersed phase solution to volume of the first mixture solution ranges between 1 and 40. Namely, during the step S14 for preparation of the second mixture solution, the ratio of volume of the dispersed phase solution to volume of the first mixture solution ranges between 1:1 and 40:1. In other words, the volume of the dispersed phase solution must be larger than or equal to the volume of the first mixture solution.

Regarding the process "the speed of rotation", it means the method of rotation and stirring utilized to mix the dispersed phase solution with the first mixture solution. Further, when the second mixture solution is quantitatively prepared, the speed of rotation can be adjusted according to the demands, as well as the particle size of the magnetic composite particles formed in the second mixture solution can be affected by the speed of rotation ranging between 200 rpm and 14000 rpm. In practice, when the speed of rotation is greater than 1000 rpm, it is easier to cause the magnetic composite particles deformed or broken, which may affect the quality of the magnetic composite particles. Thus, the preferable value of the speed of rotation ranges between 600 rpm to 1000 rpm.

The aforementioned disperse phase solution is generally defined as the liquid or solution which is mutually immiscible with the first mixture solution. Due to the type of the dispersed phase solution in this present invention is not limited, it can be machine oil, including the lubricant for lubrication, cooling and sealing mechanism of mechanical friction device, it can be mineral, vegetable or synthetic lubricant, such as vacuum pump oil, silicone oil, motor oil, gear oil, hydraulic oil and so on, it can be vegetable oil, including the vegetable oil processed by pressing, solvent extraction or by further refining production, such as soybean oil, grape seed oil, sunflower oil, peanut oil, olive oil, corn oil and so on, it can be alkanes with high carbon numbers, including liquid alkanes with carbon numbers ranging between 5 and 17, such as n-alkyl having a carbon number of 6 to 16, n-hexane, n-heptane, n-octane, n-nonane, n-decane alkoxy, n-undecane, n-dodecane, n-tridecane, n-tetradecane, n-pentadecane, and n-hexadecane, it can be isoalkyl carbon numbers ranging between 6 and 16, such as iso-hexane, iso-heptane, iso-octane, iso-nonane, iso-decane, iso-undecane, iso-dodecane iso-tridecanoic, iso-tetradecane, iso-pentadecyl, iso-hexadecane or toluene, etc. As long as the oil material is mutually immiscible with the first mixture solution, exhibits the interface tension falling within the scope of the aforementioned interface tension (ranging between 0.1 mN/m and 50 mN/m), thereby achieving the purpose of controlling the interface tension, it can be served as the dispersed phase solution.

Regarding the step S14, due to the dispersed phase solution is mutually immiscible with the first mixture solution, an interface is formed between the aforementioned dispersed phase solution and the aforementioned first mixture solution, and the interface has an interface tension value ranging between 0.1 mN/m and 50 mN/m. In other words, when the dispersed phase solution is mixed with the first mixture solution to form the second mixture solution, an interface tension is provided at the same time, and the interface tension represents the energy state of the aforementioned second mixture solution. Accordingly, this interface tension has become the critical factor in determining the dispersion state of substance in second mixture solution, thereby affecting the subsequent particle size of the magnetic composite particles in the second mixture solution.

Step S15: Finally, a hardener is added to the second mixture solution to produce the magnetic composite particles. During this step S15, a specific hardener is added in coordination with the components of the second mixture solution, thus producing the phenomena of aggregation, cross-linking, cement, polymerization, bonding, curing, consolidation or others between the composed molecules of the magnetic composite particles in the second mixture solution, and thereby a variety of magnetic composite particle products are prepared.

According to the magnetic composite particles produced by the above-mentioned steps S11 to S15, the particle size of the magnetic composite particles ranges between 10 µm and 70 µm, as well as the magnetization of the magnetic composite particles ranges between 14 emu/g and 42 emu/g.

Continuing to refer to Fig. 1, further explanation is provided to describe these features, including "the ratio of volume of the dispersed phase solution to volume of the first mixture solution" (To facilitate description, hereinafter referred to as "V oil / V water") and "the interface tension" mentioned in step S 14. Herein, the ratio of V oil / V water, the interface tension value, and the speed of rotation are the main factors controlling the particle size of the magnetic composite particles, in which the preferable ratio of V oil / V water ranges between 2 and 20, the more preferable ratio of V oil / V water ranges between 3 and 10, and the particle size is increased with the rising ratio of V oil / V water. Also, the preferable value of the interface tension ranges between 2 mN/m and 40 mN/m, the more preferable value of the interface tension ranges between 5 mN/m and 30 mN/m, and the preferable value of the speed of rotation ranges between 400 rpm and 1200 rpm.

Otherwise, an additional step S16 (not shown) can be performed after completing the step S15. Step S16 provides a washing process with the washing solution consisting of isopropanol and methanol to wash the magnetic composite particles generated in the step S 15. In this present invention, the solvent species and solvent composition of the washing solution, and the frequency and duration of the washing time are not limited, for example, different concentration of methanol and isopropanol, or a mixture solution containing methanol and isopropanol can be used to perform the washing step.

Moreover, a further step S17 (not shown) which provides a dry process can be performed after completing the step S16. Herein, the method utilized to perform the dry process is not limited, for example, air drying or drying by heating, etc., can be used to dry the magnetic composite particles.

According to the above-mentioned embodiment, the manufacturing method of the magnetic composite particles in this present invention provides a diverse choice of the combination of the magnetic nano-particles and the water-soluble macromolecule solution. Herein, users can choose a variety of magnetic nano-particles and a variety of water-soluble macromolecule solution to mix to form the first mixture solution, thereby producing diversified magnetic composite particle products.

Furthermore, due to the magnetization of the magnetic fine particles can be controlled in the manufacturing method of the magnetic composite particles in this present invention, it can be made according to the user application requirements for the composite magnetic particles (such as to reduce the toxicity, to improve the compatibility of biomolecules, to enhance the biological application, to enhance the specificity of magnetic coupling, etc.), for enhancing or reducing the magnetization of the magnetic composite particles, and for obtaining diversified magnetic composite particle. In addition to increase the effectiveness of application, the object of reducing the unnecessary waste of materials or reducing the producing cost is achieved.

Broadly speaking, in addition to the magnetic nano-particles, those skilled in the art can understand that the described particles can be selected according to different purposes and replaced by micron-particles or non-magnetic nano-particles, such as carbon spheres, quantum dots, fluorescent molecules or dendritic molecule (dendrimer) and other fine particle products by referring to the manufacturing method of the magnetic composite particles in this present invention, but not limited to these products.

Similarly, those skilled in the art can perform the chemical modification of the magnetic composite particles according to the purpose by referring the conventional chemical modification method, such as introducing a functional group (e.g. amine, hydroxyl, acyl, carbonyl group) to the surface of the magnetic composite particles. Alternatively, molecules or materials with functional groups can be performed by single-coating or multilayer-coating to the outer of the magnetic composite particles by referring the conventional chemical modification method.

Besides, after reading the technical contents of this present invention, those skilled in the art can understand that default functional groups also can be introduced by polymerization during manufacturing the magnetic composite particles for obtaining the magnetic composite particles with default functional groups. But there is no particular limitation in the type of functional groups.

Moreover, the manufacturing method of the magnetic composite particles in this present invention is accompanied with usage of magnetic nano-particles and water-soluble macromolecules. The magnetic nano-particles are obtained from preparation or pre-selection in advance, and therefore a wide range of species can be chosen to serve as the magnetic nano-particles, such as magnetic nano-materials with high or low magnetization. Particularly, due to this manufacturing method of the magnetic composite particles can be performed by the demands of users, the magnetization of the magnetic composite particles can be therefore controlled by adjusting the ratio of weight of the magnetic nano-particles to weight of the aqueous macromolecule solution. Hence, coordinating the aforementioned step (1) to step (5) of the manufacturing method with the usage of a variety of magnetic nano-particles and water-soluble macromolecules can prepare and produce diversified magnetic composite particles with a variety of magnetization ranging between 14 emu/g to 42 emu/g.

Regarding the manufacturing method in the conventional arts, the surfactant is often utilized to stabilize the hybrid material for well and uniformly mixing the macromolecule solution with the magnetic particles, and the complicated and expensive chemical polymerization is even often performed to produce the magnetic composite particle. However, the present invention adopts a relatively simple procedure of controlling the water-oil interface tension for achieving the purpose of uniformly mixing and controlling the particle size of the magnetic composite particles, thereby reducing the production cost.

Furthermore, regarding the surface of the magnetic composite particles provided in this present invention, it can further bonds to different functional groups or be modified by physical and chemical methods in addition to exhibits the magnetization, thereby displaying a wide range of application and high economic value. For example, the applicable scope also includes bio-detection method or clinical detection analysis (e.g., immunoassay, chemiluminescence analysis, radio-active analysis), biomedical research, and high-throughput screening technology, etc.

Two experimental examples are provided as followed for further illustrating the manufacturing method of the magnetic composite particles of the first preferred embodiment in the present invention.

### Experiment 1: Preparation of cellulose magnetic particulate composites

First, in order to obtain the magnetic nano-particles, prepare the iron oxide magnetic nano-particles via the chemical co-precipitation as followed: Mixing the divalent iron ions with the trivalent iron ions in a molar ratio of 1:2 at a speed of rotation of 300 rpm, and adjusting the pH value of the reaction to 12 by 1 M NaOH solution. After the reaction is performed at 60 to 1 hour, the black precipitate is then centrifuged at high speed of rotation and deionized water is added to the dispersion, thus a magnetic iron oxide magnetic nano-particles c (Fe₃O₄) with an average particle size about 10 nm is prepared.

While preparing the iron oxide magnetic nano-particles, the water-soluble cellulose macromolecules are provided to dissolve in 6% sodium hydroxide and 4% urea aqueous solution at low temperature to form a cellulose aqueous macromolecule solution.

Then, three kinds of first mixture solutions are prepared by mixing the above-prepared iron oxide magnetic nano-particles with the cellulose aqueous macromolecule solution in different ratio of weight (To facilitate description, hereinafter referred to as W iron oxide magnetic nano-particles / W cellulose): One is called as Sample A, which is prepared under the ratio of W iron oxide magnetic nanoparticles / W cellulose of 0.25, another is called as Sample B, which is prepared under the ratio of W iron oxide magnetic nanoparticles / W cellulose of 0.5, and the other is called as Sample C, which is prepared under the ratio of W iron oxide magnetic nanoparticles / W cellulose of 1.

Subsequently, an oil phase is provided as the dispersed phase solution, and the above-mentioned samples A, B, and C are respectively mixed well with the dispersed phase solution at a particular speed of rotation by a rotational stir to form the three second mixture solutions. Next, a hardener is added to the second mixture solutions for preparation of cellulose magnetic particulate composites A, B, and C, respectively. And then, these cellulose magnetic particulate composites A, B, and C are later analyzed for their magnetization, as the analysis results shown in Fig. 2.

Fig. 2 is an analytic histogram result indicating the magnetization of the above-mentioned three cellulose magnetic particulate composites A, B, and C according to the first experiment of the present invention. As illustrated in Fig. 2, the magnetization of the cellulose magnetic particulate composites A, B, and C are about 12.5 emu/g, 24.6 emu/g, and 42.7 emu/g, respectively. Besides, the magnetization data of the cellulose magnetic particulate composites A, B, and C clearly shows that the magnetization of the cellulose magnetic particulate composite is increased with the rising ratio of W iron oxide magnetic nanoparticles / W cellulose. In addition, the magnetization of the first mixture solution will affect the magnetization of the finished cellulose magnetic particulate composite, as well as the magnetization of the cellulose magnetic particulate composite changes with the above-mentioned "ratio of weight of the iron oxide magnetic nano-particles to weight of the cellulose aqueous macromolecule solution".

Meanwhile, in order to prepare the cellulose magnetic particulate composite with different particle sizes, the ratio of W iron oxide magnetic nanoparticles drawn / W cellulose of 1 is applied to prepare the first mixture solution. Also, an oil phase is used as the disperse phase solution to mix and stir at a speed of rotation of 800 rpm for preparing four kinds of second mixture solutions with different "ratio of volume of the disperse phase solution to volume of the first mixture solution" (To facilitate description, hereinafter referred to as "V oil / V water"): One is called as Sample D, which is prepared under the ratio of V oil / V water of 2, the second is called as Sample E, which is prepared under the ratio of V oil / V water of 5, the third is called as Sample F, which is prepared under the ratio of V oil / V water of 10, and the final is called as Sample G, which is prepared under the ratio of V oil / V water of 20.

Then, a hardener is added to the above-mentioned four kinds of second mixture solutions respectively for preparation of four kinds of cellulose magnetic particulate composites D, E, F, and G, respectively. Herein, the species of hardener can be alcohol or ketone, such as methanol, ethanol, propanol, butanol, isopropanol, butanol, acetone, methyl ethyl ketone, isobutyl ketone, etc. Finally, isopropanol and methanol are used to wash the above-mentioned four kinds of cellulose magnetic particulate composites, followed by drying and obtaining the cellulose magnetic particulate composites.

Referring to Fig. 3 to Fig. 6, respectively illustrate the electron microscopic photograph of the cellulose magnetic particulate composites D, E, F, and G. As these photographs shown, these cellulose magnetic particulate composites provided in Experiment 1 of this present invention represent spherical appearance and uniform size.

Next, the particle sizes of the above-mentioned cellulose magnetic particulate composites D, E, F and G are confirmed and analyzed by the conventional method, and the analysis result is illustrated in Fig. 7.

Fig. 7 is an analytic result of the magnetization indicated by histogram according to the first experiment of the present invention, which indicates that the particle size of the cellulose magnetic particulate composite D ranges between 10 µm and 20 µm, the particle size of the cellulose magnetic particulate composite E ranges between 20 µm and 40 µm, the particle size of the cellulose magnetic particulate composite F ranges between 30 µm and 50 µm, the particle size of the cellulose magnetic particulate composite G ranges between 50 µm and 70 µm. Accordingly, the analysis result sufficiently indicates that the magnetization of the cellulose magnetic particulate composite changes with the ratio of V oil / V water.

In addition, based on the electron microscopic photographs as shown in Fig. 3 to Fig. 6 and the particle size distribution analysis as shown in Fig. 7, it can be clearly observed that the particle size of the cellulose magnetic particulate composite is increased with the rising ratio of V oil / V water.

Further, the effect of speed of rotation on the particle size of the cellulose magnetic particulate composite during mixing the disperse phase solution with the second mixture solution is confirmed as the following.

First, the second mixture solution called Sample H is prepared while the ratio of V oil / V water of the disperse phase solution (oil phase) is 10, followed by respectively mixing the quantitative Sample H with five levels of speed of rotation by the rotational stir.

Then, according to the aforesaid steps, these five types of cellulose magnetic particulate composites are prepared respectively as follows: cellulose magnetic particulate composite H400, which is prepared at the speed of rotation of 400 rpm, cellulose magnetic particulate composite H600, which is prepared at the speed of rotation of 600 rpm, cellulose magnetic particulate composite H1000, which is prepared at the speed of rotation of 1000 rpm, and cellulose magnetic particulate composite H1200, which is prepared at the speed of rotation of 1200 rpm. Also, the particle size distribution of these five cellulose magnetic particulate composites is analyzed and the analysis result is illustrated in Fig. 8, which obviously shows that the particle size of the cellulose magnetic particulate composite changes with the speed of rotation.

### Experiment 2: Preparation of sodium alginate magnetic composite particles

First, in order to obtain the magnetic nano-particles, prepare the iron oxide magnetic nano-particles via the chemical co-precipitation as followed: Mixing the divalent iron ions with the trivalent iron ions in a molar ratio of 1:2 at a speed of rotation of 300 rpm, and adjusting the pH value of the reaction to 12 by 1 M NaOH solution. After the reaction is performed at 60 °C to 1 hour, the black precipitate is then centrifuged at high speed of rotation and deionized water is added to the dispersion, thus a magnetic iron oxide magnetic nano-particles c (Fe₃O₄) with an average particle size about 10 nm is prepared.

While preparing the iron oxide magnetic nano-particles, the water-soluble sodium alginate macromolecules are provided to dissolve in water at low temperature to form an aqueous cellulose macromolecule solution.

Then, three kinds of first mixture solutions are prepared by mixing the above-prepared iron oxide magnetic nano-particles with the sodium alginate aqueous macromolecule solution in different ratio of weight (To facilitate description, hereinafter referred to as W iron oxide magnetic nano-particles / W sodium alginate): One is called as Sample A', which is prepared under the ratio of W iron oxide magnetic nanoparticles / W sodium alginate of 0.25, another is called as Sample B', which is prepared under the ratio of W iron oxide magnetic nanoparticles / W sodium alginate of 0.5, and the other is called as Sample C', which is prepared under the ratio of W iron oxide magnetic nanoparticles / W sodium alginate of 1.

Subsequently, an oil phase is provided as the dispersed phase solution, and the above-mentioned samples A', B', and C' are respectively mixed well with the dispersed phase solution at a particular speed of rotation by a rotational stir to form the three second mixture solution. Next, a hardener is added to the second mixture solutions for preparation of sodium alginate magnetic particulate composites A', B', and C', respectively. And then, these sodium alginate magnetic particulate composites A', B', and C' are later analyzed for their magnetization, as the analysis results shown in Fig. 9.

Fig. 9 is an analytic histogram result indicating the magnetization of the above-mentioned three sodium alginate magnetic particulate composites A', B', and C' according to the second experiment of the present invention. As illustrated in Fig. 9, the magnetization of the sodium alginate magnetic particulate composites A', B', and C' are about 13.6 emu/g, 24.8 emu/g, and 40.9 emu/g, respectively. Besides, the magnetization data of the sodium alginate magnetic particulate composites A', B', and C' clearly shows that the magnetization of the sodium alginate magnetic particulate composite changes with the ratio of W iron oxide magnetic nanoparticles / W sodium alginate, similar with the result shown in Experiment 1. In addition, the magnetization of the first mixture solution will affect the magnetization of the finished sodium alginate magnetic particulate composite, as well as the magnetization of the sodium alginate magnetic particulate composite changes with the ratio of W iron oxide magnetic nano-particles / W sodium alginate.

Meanwhile, in order to prepare the sodium alginate magnetic particulate composite with different particle sizes, the ratio of W iron oxide magnetic nanoparticles / W sodium alginate of 1 is applied to prepare the first mixture solution. Also, an oil phase is used as the disperse phase solution to mix and stir at a speed of rotation of 800 rpm for preparing four kinds of second mixture solutions with different "ratio of volume of the disperse phase solution to volume of the first mixture solution" (To facilitate description, hereinafter referred to as "V oil / V water"): One is called as Sample D', which is prepared under the ratio of V oil / V water of 2, the second is called as Sample E', which is prepared under the ratio of V oil / V water of 5, and the third is called as Sample F', which is prepared under the ratio of V oil / V water of 10, and the final is called as Sample G', which is prepared under the ratio of V oil / V water of 20.

Then, a hardener is added to the above-mentioned four kinds of second mixture solutions respectively for preparation of four kinds of sodium alginate magnetic particulate composites D', E', F', and G', respectively. Finally, isopropanol and methanol are used to wash the above-mentioned four kinds of sodium alginate magnetic particulate composites, followed by drying and obtaining the sodium alginate magnetic particulate composites.

Referring to Fig. 10, it illustrates the electron microscopic photograph of the sodium alginate magnetic particulate composite E'. As the photograph shown, these sodium alginate magnetic particulate composites provided in Experiment 2 of this present invention represent spherical appearance and uniform size. Besides, due to the analysis results provided by Experiment 2 are similar with those provided by Experiment 1, the photograph of E' is taken as the example for illustration and explanation.

Next, the particle sizes of the above-mentioned sodium alginate magnetic particulate composites D', E', F' and G' are confirmed and analyzed by the conventional method. Also, it is not necessary to repeat the illustration due to the analysis results are similar with those demonstrated in Experiment 1.

Briefly, this analysis result indicates that the ratio of V oil / V water between the disperse phase solution and the second mixture solution can affect the particle size of the sodium alginate magnetic particulate composite.

Accordingly, based on the particle size distribution analysis and the above-mentioned electron microscopic photographs, it can be clearly observed that the particle size of the sodium alginate magnetic particulate composite is increased with the rising ratio of V oil / V water.

The above embodiments are provided only to demonstrate principles and functions of the present invention and not intended to limit the scope of the present invention. Various changes in form and details may be made by those of ordinary skill in the art without departing from the spirit and scope of the present invention as defined by the following claims.

## Claims

1. A manufacturing method of magnetic composite particles, comprising the following steps:
(1) Providing magnetic nano-particles;
(2) Providing water-soluble macromolecules, and dissolving the water-soluble macromolecule into an aqueous macromolecule solution;
(3) Mixing the magnetic nano-particles with the aqueous macromolecule solution in a particular ratio of weight into a first mixture solution;
(4) Providing a disperse phase solution, and mixing the disperse phase with the first mixture solution into a second mixture solution in a particular ratio of volume at a speed of rotation by a rotational stir, wherein the particular ratio of volume ranges between 1 and 40, the speed of rotation ranges between 200 rpm and 14000 rpm, and an interface with an interface tension ranging between 0.1 mN/m and 50 mN/m is formed between the disperse phase solution and the first mixture solution due to the disperse phase solution and the first mixture solution are mutually immiscible; and
(5) Adding a hardener to the second mixture solution to produce the magnetic composite particles with a particle size ranging between 10 µm and 70 µm and a magnetization ranging between 14 emu/g and 42 emu/g.

2. The manufacturing method of claim 1, wherein the method further comprises the step of washing the magnetic composite particles with isopropanol and methanol after producing the magnetic composite particles.

3. The manufacturing method of claim 1, wherein the particular ratio of weight ranges between 0.1 and 1.

4. The manufacturing method of claim 1, wherein the particular ratio of volume ranges between 2 and 20, the speed of rotation ranges between 400 rpm and 1200 rpm, and the interface tension ranges between 2 mN/m and 40 mN/m.

5. The manufacturing method of claim 4, wherein the preferable particular ratio of volume ranges between 3 and 10, the preferable speed of rotation ranges between 600 rpm and 1000 rpm, and the preferable interface tension ranges between 5 mN/m and 30 mN/m.

6. The manufacturing method of claim 1, wherein the magnetic nano-particles have a particle size ranging between 10 nm and 100 nm.

7. The manufacturing method of claim 1, wherein the magnetic nano-particles are compounds with chemical formula of FeₓM_{y}(VIA)_{z}, in which M is an inner transition metal element, VIA is a Group VIA element, x is not less than zero, and y and z are non-zero positive numbers.

8. The manufacturing method of claim 1, wherein the water-soluble macromolecules include macromolecules selected from the group consisting of cellulose, sodium alginate, chitosan and polyvinyl alcohol.

9. The manufacturing method of claim 1, wherein the disperse phase solution is a solution selected from the group consisting of vacuum pump oil, silicone oil, engine oil, gear oil, hydraulic oil, soybean oil, grape seed oil, sunflower oil, peanut oil, olive oil and corn oil.

10. The manufacturing method of claim 1, wherein the disperse phase solution is a solution having elements selected from the group consisting of N-alkyl with a carbon number of 6 to 16, isoalkyl with a carbon number of 6 to 12, and Toluene.
